# FASCICULE DE BREVET EUROPEEN

(11) **EP 2 232 307 B1**
(45) Date de publication et mention de la délivrance du brevet: **23.05.2012**
(21) Numéro de dépôt: 08862886.2
(22) Date de dépôt: 05.12.2008
(51) Int. Cl.: G02B 27/14

(54) **SYSTEME DE POINTAGE D'UN LASER**
LASERZEIGESYSTEM
LASER POINTING SYSTEM

(30) Priorité: 18.12.2007 FR 0708842
(43) Date de publication de la demande: 29.09.2010
(73) Titulaire: THALES, 92200 Neuilly-sur-Seine (FR)
(72) Inventeur: DOITTAU, François-Xavier, F-78910 Behoust/Orgerus (FR); POCHOLLE, Jean-Paul, F-91290 La Norville (FR)
(74) Mandataire: Esselin, Sophie
(86) Numéro de dépôt international: PCT/EP2008/066926
(87) Numéro de publication internationale: WO 2009/077360

(56) Documents cités:
- EP-A- 0 911 646
- EP-A- 1 113 240
- FR-A- 2 505 505
- GB-A- 1 378 852
- US-A- 1 240 300
- US-A- 3 574 467

## Description

L'invention se rapporte à un système de pointage d'un laser et notamment d'un laser à forte puissance moyenne. Elle a également pour objet un système d'imagerie laser et un système de pointage de plusieurs sources optiques.

### ETAT DE LA TECHNIQUE

Dans les systèmes de traitement par faisceaux optiques lasers, on peut avoir besoin de diriger précisément le faisceau laser de traitement sur la cible à traiter. On peut donc avoir besoin de connaître précisément le point d'impact du faisceau de traitement sur la cible.

Pour cela, il est connu d'utiliser des systèmes d'imagerie permettant d'avoir une image de la cible et du point d'impact du faisceau de traitement sur la cible. Le système peut alors modifier l'orientation du faisceau de traitement en fonction de l'image obtenu.

Pour réaliser cette imagerie, les systèmes connus transmettent généralement vers la cible un faisceau d'éclairement. Un système d'imagerie reçoit la lumière réfléchie par la cible et identifie la position de la cible.

Cependant, les transmissions du faisceau de traitement et du faisceau d'éclairement utilisent souvent les mêmes circuits optiques. La réception par le système d'imagerie peut donc être perturbée par le système de transmission du faisceau de traitement notamment lorsque la cible est de petites dimensions.

L'invention permet de résoudre cet inconvénient.

L'invention est plus particulièrement applicable dans des systèmes de visée dans lesquels un système de réflexion permet d'utiliser les mêmes optiques pour la transmission du faisceau de traitement et pour l'imagerie.

### RESUME DE L'INVENTION

L'invention a donc pour objet un système de pointage d'un faisceau laser, caractérisé en ce qu'il comporte :
- au moins une source laser de traitement permettant d'émettre un faisceau laser de traitement vers une cible, ledit faisceau de traitement étant transmis à travers une zone non réfléchissante d'un premier miroir , ledit miroir permettant le renvoi vers le système d'imagerie de la lumière réfléchie par la cible, ladite zone de faible coefficient de réflexion du premier miroir induisant une zone d'ombre vers le système d'imagerie ;
- un deuxième miroir recevant ledit faisceau de traitement, destiné à l'orienter et le réfléchir vers la cible ;
- une source d'éclairement permettant d'éclairer ladite cible à l'aide du faisceau d'éclairement,
- un système d'imagerie recevant un faisceau d'éclairement réfléchi par la cible,
- un premier circuit de commande permettant de commander l'orientation dudit système de pointage vers la cible,
- un deuxième circuit de commande permettant de décaler angulairement le faisceau de traitement d'un angle déterminé, de mesurer à partir d'une image obtenue par le système d'imagerie, la distance séparant la position d'une zone de la cible par rapport à la position du spot du faisceau de traitement, puis de décaler en sens inverse le faisceau de traitement d'un angle correspondant à ladite distance mesurée, le décalage angulaire du faisceau de traitement ayant une amplitude telle que la mesure de la position de la cible n'est pas perturbée par la zone d'ombre.

Le miroir M2 assure une double fonction : stabilisation fine du pointage à travers CT et à partir des signaux issus de CA et décalage du faisceau de traitement afin d'éviter la perturbation apportée par la zone d'ombre.

Selon une forme de réalisation de l'invention, ledit faisceau de traitement est transmis à travers une zone non réfléchissante d'un premier miroir, ledit miroir permettant le renvoi vers le système d'imagerie de la lumière réfléchie par la cible. Cette zone de faible coefficient de réflexion du premier miroir induit une zone d'ombre vers le système d'imagerie.

Selon cette forme de réalisation, ledit angle dont est décalé angulairement le faisceau de traitement correspond, dans le dispositif d'imagerie, au diamètre de ladite zone d'ombre.

Selon une autre variante de réalisation, le système de l'invention comporte un troisième miroir destiné à réfléchir vers la cible la lumière reçu du deuxième miroir, ou inversement à réfléchir vers le deuxième miroir la lumière reçue de la cible, ce troisième miroir permettant de régler la focalisation du faisceau reçu du deuxième miroir.

Selon une autre variante de réalisation, le système de l'invention comporte un quatrième miroir recevant la lumière reçue du premier miroir et la réfléchissant vers le système d'imagerie.

Selon une forme de réalisation avantageuse de l'invention, ledit faisceau de traitement est à une première longueur d'onde ou gamme de longueurs d'ondes, ledit faisceau d'éclairement est à une deuxième longueur d'onde ou gamme de longueurs d'ondes différentes de la première longueur d'onde ou gamme de longueurs d'ondes. Le système comportant en outre un filtre spectral situé entre le premier miroir et le système d'imagerie et permettant la transmission de la deuxième longueur d'onde ou gamme de longueurs d'ondes seulement au système d'imagerie.

Avantageusement, la source laser de traitement comporte une fibre optique émettrice ou un assemblage de plusieurs fibres optiques émettrices dont une extrémité affleure à ladite face réfléchissante. La surface de ladite extrémité constituant ladite zone peu ou pas réfléchissante. La face réfléchissante et la surface de ladite extrémité sont dans un même plan et sont inclinées par rapport à l'axe de la fibre optique émettrice ou de l'assemblage de fibres optiques émettrices.

Selon une variante de réalisation ledit premier miroir comporte une face revêtue d'un réseau de diffraction en volume, lequel comporte un trou dans ladite zone pour le passage dudit faisceau de traitement et qui exploite la conservation du caractère quasi-monochromatique du rayonnement émis par le laser d'éclairage après réflexion sur la cible pour séparer angulairement la voie traitement de la voie imagerie.

### BREVE DESCRIPTION DES FIGURES

Les différents objets et caractéristiques de l'invention apparaîtront plus clairement dans la description qui va suivre et dans les figures annexées qui représentent:
- la figure 1, un exemple de réalisation d'un système d'imagerie optique auquel peut s'appliquer l'invention,
- les figures 2a et 2e, un exemple du procédé de pointage optique selon l'invention,
- les figures 3 et 4, des exemples de réalisation de miroirs applicables dans le procédé et dans le système de l'invention,
- la figure 5, un système de pointage optique mettant en oeuvre le procédé selon l'invention.

### DESCRIPTION DETAILLEE

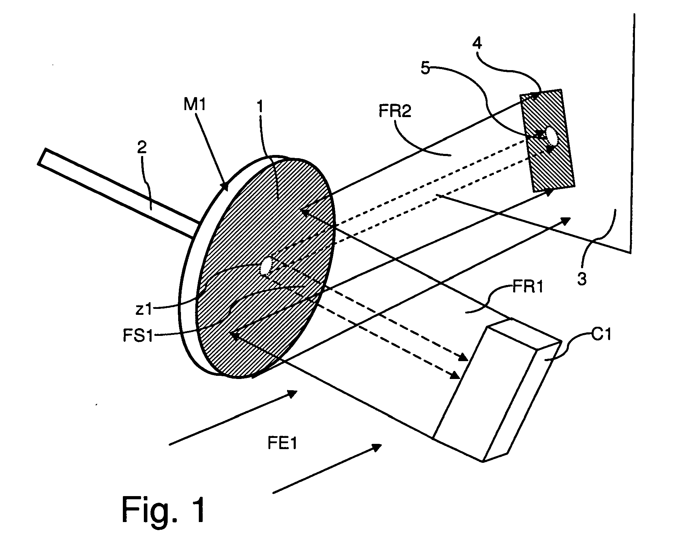

En se reportant à la figure 1, on va donc décrire tout d'abord un exemple de système de pointage d'un faisceau laser auquel s'applique l'invention.

Selon cet exemple, une fibre optique 2 traverse un miroir M1. La surface réflectrice 1 du miroir M1 est munie d'une zone z1 non réflectrice (ou peu réflectrice comparé à l'ensemble de la surface 1) par laquelle la fibre 2 peut émettre un faisceau lumineux de traitement FS1 vers une zone localisée d'une cible C1. Dans ces conditions une source optique peut émettre un faisceau lumineux à travers cette zone z1, mais par contre de la lumière incidente sur le miroir M1 est réfléchie par la surface réflectrice 1 sauf par la zone z1.

Par ailleurs, la cible C1 est éclairée par un faisceau lumineux d'imagerie FE1. En échange, la cible C1 réfléchit un faisceau FR1. Celui-ci est réfléchi par la surface 1 du miroir M1 sous la forme du faisceau FR2 vers un système d'imagerie ou dispositif de prise de vues 3. L'image affichée 4 est donc l'image de la cible. De plus, la portion du faisceau FR1 qui atteint le miroir dans la zone z1 n'est pas (ou pratiquement pas) réfléchie par le miroir M1. On a donc, dans l'image 4 de la cible, une zone 5 moins lumineuse que nous appellerons "zone aveugle". Cette zone correspond à la zone z1 du miroir M1. Dans cette zone, le dispositif de prise de vues ne voit aucun détail de la cible.

Le système d'imagerie de la figure 1 permet donc de visualiser la zone d'impact sur la cible C1 du faisceau FS1 émis par la fibre optique 2. En visualisant l'image 4 obtenue par le dispositif de prise de vues, un opérateur ou un système de traitement d'image peut donc modifier la zone d'impact sur la cible en modifiant l'orientation et/ou la focalisation du faisceau FS1.

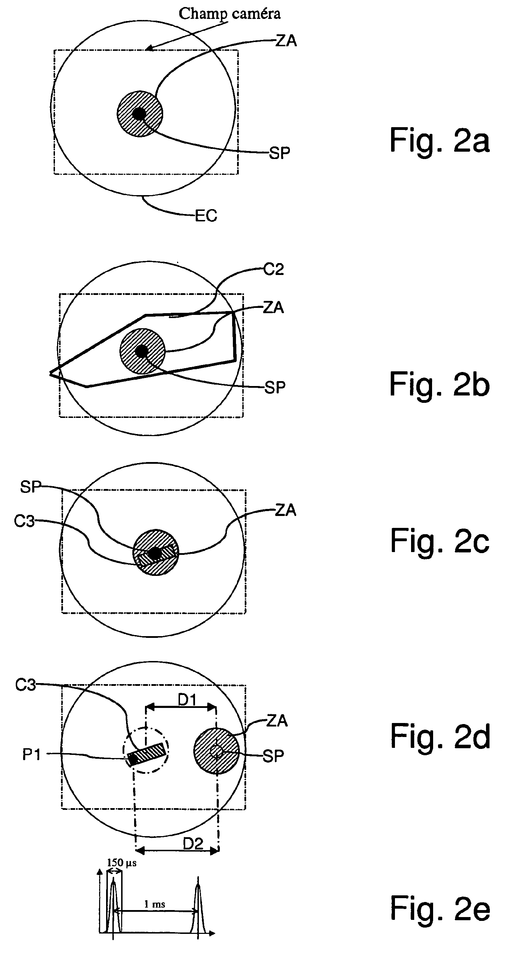

La figure 2a représente l'image sur un écran de caméra (en trait mixte sur la figure) d'une zone d'illumination EC par le faisceau d'imagerie (FE1 sur la figure 1). A l'intérieur de la zone EC, on a le spot de traitement SP émis la source S1 qui se trouve dans une zone d'ombre ou zone aveugle ZA comme expliqué précédemment.

Dans le cas d'une grande cible C2 représentée en figure 2b, la zone aveugle ZA est plus petite que la cible et on peut localiser le spot SP sur la cible.

Par contre, dans le cas d'une petite cible C3 (figure 2c), l'image de la cible C3 est entièrement contenue dans la zone aveugle ZA et n'est donc pas visible ou est difficilement visible à l'aide de la caméra. L'image obtenue par le dispositif de prise de vues ne permet donc pas de localiser précisément la position de la cible et notamment la zone d'impact du faisceau de traitement sur la cible.

L'invention a donc pour objet un procédé qui permet de remédier à cet inconvénient.

Le procédé de l'invention prévoit donc de réaliser un pré-pointage du faisceau de traitement FS1 vers la cible. Ce pré-pointage est réalisé selon les techniques connues et ne nécessite pas une grande précision.

Dans le cas d'une petite cible dont l'image dans le dispositif de prise de vues est contenue dans la zone aveugle ZA, le procédé de l'invention consiste ensuite à décaler angulairement le faisceau de traitement FS2 (figure 2) d'un angle connu de façon à décaler, sur l'image du dispositif de prise de vues, la zone aveugle par rapport à la cible d'une distance D1 au moins égale au diamètre de la zone aveugle. Sur la figure 2d, l'image obtenue est donc telle que, au lieu d'avoir la zone aveugle (en trait mixte sur la figure) située sur la cible C3, elle se trouve maintenant décalée d'une distance D1.

Dans ces conditions, la caméra permet de voir une image telle que celle de la figure 2d où on peut voir d'une part la cible C3 et d'autre part la zone aveugle ZA.

Sur la figure 2d, le spot du faisceau de traitement SP a été indiqué au centre de la zone aveugle ZA.

A l'aide de l'image de la figure 2d, on mesure la distance D2 entre le centre de la zone aveugle (qui correspond au centre du spot du faisceau de traitement) et une zone déterminée P1 de la cible C3 que l'on veut traitée avec le faisceau de traitement.

Ensuite, on effectue un décalage angulaire inverse du faisceau de traitement d'un angle correspondant à la distance D2 ainsi déterminée. Le système peut ensuite émettre le faisceau de traitement vers la zone P1 de la cible

Comme cela est illustré par la figure 2e, la perturbation sur le faisceau de traitement peut ne pas excéder 150 µs toutes les millisecondes soit 15% de la durée pendant laquelle le laser de traitement peut être neutralisé à l'émission afin de ne pas pénaliser le rendement global tout en garantissant un isolement photonique de la caméra vis a vis du laser de traitement.

Dans le système de la figure 1, le miroir M1 peut être réalisé à l'aide d'un bloc dans lequel une fibre 2 a été noyée. Une face 1 du bloc B1 est usinée selon un plan incliné par rapport à l'axe de la fibre 2. Cette face 1 est ensuite rendue réfléchissante (métallisée par exemple) et dans la surface réfléchissante obtenue, la zone z1 est rendue non réfléchissante. Pour cela, par exemple, un faisceau lumineux suffisamment énergétique est transmis par la fibre 2 pour détériorer la surface réfléchissante à l'endroit de la zone z1.

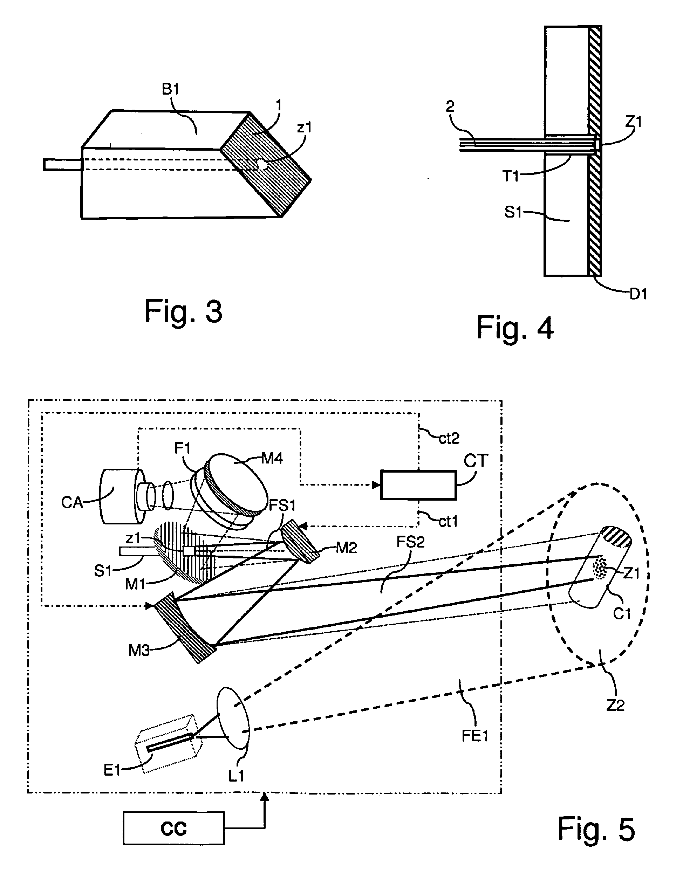

La figure 4 représente une variante de réalisation du miroir M1. Il comporte une lame support S1 dont une face est revêtue d'une couche d'un matériau polymère dans laquelle un réseau de diffraction en volume a été enregistré (réseau de Bragg). De plus, un trou T1 traverse la lame support et le réseau de diffraction de façon à permettre la mise en place d'une fibre (ou d'un ensemble de fibres) dont l'extrémité d'émission permette une émission lumineuse par la zone z1.

En se reportant à la figure 5, on va maintenant décrire un système de pointage plus complet permettant de mettre en oeuvre le procédé de pointage selon l'invention décrit précédemment.

Une source S1 émet un faisceau lumineux FS1 à travers un premier miroir M1. Ce miroir est tel que celui qui a été décrit précédemment en se reportant aux figures 3 et 4. La zone d'émission z1 de ce faisceau lumineux à travers le miroir n'est donc pas réfléchissante ou faiblement réfléchissante.

Un deuxième miroir M2 destiné à orienter le faisceau, réfléchit celui-ci vers un troisième miroir M3 qui permet de focaliser le faisceau vers la zone Z1 à traiter de la cible C1.

Une source de réglage de pointage E1 émet un faisceau lumineux FE1 qui éclaire la cible C1 selon une zone d'éclairement Z2. Cette zone Z2 possède une surface nettement supérieure à celle de la zone Z1 et englobe celle-ci.

Une partie au moins de la lumière du faisceau FE1 est réfléchie par la cible vers le miroir M3 qui la réfléchit vers le miroir M2. Cette lumière est ensuite réfléchie par le miroir M1, puis par un miroir M4 vers un appareil de prise de vues CA.

Cependant, comme cela a été précisé précédemment, la zone z1 du miroir M1 par lequel le faisceau FS1 a été émis est peu réfléchissante. L'appareil de prise de vues CA reçoit donc une image de la cible dans laquelle la zone aveugle ZA apparaît moins lumineuse ou de couleur différente que le reste de l'image de la cible. L'image obtenue par l'appareil de prise de vues permet ainsi de localiser la zone aveugle ZA.

En ce qui concerne la commande du pointage du faisceau laser de traitement FS2, le système comporte un circuit de commande central CC qui permet de commander un pré-pointage de l'ensemble du système de pointage de la figure 5 de façon que les faisceaux FS2 et FE1 soient sensiblement dirigés vers la cible C1 à traiter.

Ce pré-pointage se fait à partir de données fournies par un système d'imagerie IR qui couvre un champ de 1 à 3 degrés avec une précision de l'ordre de 500 µradians pour un écart type à 3σ.

Ensuite, le système de pointage de la figure 5 est mis en fonctionnement. La source d'éclairement émet le faisceau FE1 qui est réfléchi par la cible C1. Comme mentionné précédemment, le dispositif de prise de vues reçoit l'image de la cible.

Cette image est transmise à un circuit de traitement CT qui identifie la dimension de la zone aveugle ZA et sa position sur la cible.

Si la dimension de la zone aveugle est supérieure (ou éventuellement égale) à la dimension de la cible, le circuit de traitement commande un décalage angulaire du miroir M2 décalant angulairement de ce fait le faisceau FS2 d'une valeur telle que dans le dispositif de prise de vues, la zone aveugle ZA est décalée d'une distance au moins égale au diamètre de la zone aveugle.

L'image obtenue par le dispositif de prise de vues est transmise au circuit de traitement CT qui mesure la distance entre le centre de la zone aveugle et une zone choisie de la cible C1 à traiter.

Le circuit de traitement CT commande ensuite, par la liaison ct1, l'orientation du miroir M2 pour ajuster la direction du faisceau FS2 en fonction du résultat de la mesure qui vient d'être effectuée. Il peut également commander, par la liaison ct2, le miroir M3 pour effectuer un réglage de la focalisation.

Le dispositif de prise de vues peut utiliser une caméra opérant sur le domaine spectral 1,5µm, fonctionnant à la cadence de 1 kHz avec un système d'obturation synchronisé sur le retour d'une impulsion courte (-0,5µs) générée par un laser d'illumination qui fournit une image de jour comme de nuit avec une résolution sur la cible de 0,15 à 0,3m avec une cadence d'échantillonnage adaptée à la bande passante nécessaire pour corriger les fluctuations du canal atmosphérique localisé entre l'optique d'émission et la cible.

Dans le système de la figure 5, avantageusement, les longueurs d'ondes émises par les sources S1 et E1 sont de valeurs différentes. Notamment, la longueur d'onde émise par la source E1 n'est pas contenue dans la gamme de longueurs d'ondes de la source S1. L'invention prévoit alors un filtre spectral F1 qui permet le passage de la longueur d'onde (ou de la gamme de longueurs d'ondes) émise par la source E1 vers l'appareil de prise de vues. On diminue ainsi les risques de retours de longueurs d'ondes du faisceau FS2 et réfléchies par la cible pour éviter de détériorer l'image captée par l'appareil de prise de vues.

Par exemple, la longueur d'onde d'émission de la source E1 pourra être de 1,5 micromètre et la source S1 pourra émettre autour de 1,08 micromètre.

## Revendications

1. Système de pointage d'un faisceau laser, **caractérisé en ce qu'**il comporte :
- au moins une source laser de traitement (S1) permettant d'émettre un faisceau laser de traitement (FS1, FS2) vers une cible (C1), ledit faisceau de traitement (FS1) étant transmis à travers une zone non réfléchissante (z1) d'un premier miroir (M1), ledit miroir (M1) permettant le renvoi vers un système d'imagerie (CA) recevant un faisceau d'éclairement réfléchi (FR2) par la cible, ladite zone (z1) de faible coefficient de réflexion du premier miroir (M1) induisant une zone d'ombre (ZA) vers le système d'imagerie (CA) ;
- un deuxième miroir (M2) recevant ledit faisceau de traitement, destiné à l'orienter et le réfléchir vers la cible ;
- une source d'éclairement (E1) permettant d'éclairer ladite cible à l'aide du faisceau d'éclairement (FE1),
- un premier circuit de commande (CC) permettant de commander l'orientation dudit système de pointage vers la cible,
- un deuxième circuit de commande (CT) permettant de décaler angulairement le faisceau de traitement (FS1) d'un angle déterminé, de mesurer à partir d'une image obtenue par le système d'imagerie, la distance (D2) séparant la position d'une zone (P1) de la cible par rapport à la position du spot du faisceau de traitement, puis de décaler en sens inverse le faisceau de traitement d'un angle correspondant à ladite distance mesurée (D2), le décalage angulaire du faisceau de traitement ayant une amplitude telle que la mesure de la position de la cible n'est pas perturbée par la zone d'ombre ;
- le deuxième miroir (M2) assurant une double fonction de stabilisation fine du pointage à travers ledit deuxième circuit de commande (CT) et à partir des signaux issus du système d'imagerie (CA) et de décalage du faisceau de traitement afin d'éviter la perturbation apportée par la zone d'ombre.

2. Système selon la revendication 1, **caractérisé en ce que** ledit angle dont est décalé angulairement le faisceau de traitement (FS1) correspond, dans le dispositif d'imagerie (CA), au diamètre de ladite zone d'ombre (ZA).

3. Système selon la revendication 2, **caractérisé en ce qu'**il comporte un troisième miroir (M3) destiné à réfléchir vers ladite cible (C1) la lumière reçu du deuxième miroir (M2), ou inversement à réfléchir vers le deuxième miroir la lumière reçue de la cible, ce troisième miroir (M3) permettant de régler la focalisation du faisceau reçu du deuxième miroir (M2)

4. Système selon la revendication 3, **caractérisé en ce qu'**il comporte un quatrième miroir (M4) recevant la lumière reçue du premier miroir (M1) et la réfléchissant vers le système d'imagerie (CA).

5. Système selon l'une quelconque des revendications 1 à 4, **caractérisé en ce que** ledit faisceau de traitement (FS1) est à une première longueur d'onde ou gamme de longueurs d'ondes, ledit faisceau d'éclairement (FE1) est à une deuxième longueur d'onde ou gamme de longueurs d'ondes différentes de la première longueur d'onde ou gamme de longueurs d'ondes, le système comportant en outre un filtre spectral (F1) situé entre le premier miroir (M1) et le système d'imagerie (CA) et permettant la transmission de la deuxième longueur d'onde ou gamme de longueurs d'ondes seulement au système d'imagerie.

6. Système selon l'une quelconque des revendications 1 à 5, **caractérisé en ce que** la source laser de traitement (S1) comporte une fibre optique émettrice ou un assemblage de plusieurs fibres optiques émettrices dont une extrémité affleure à ladite face réfléchissante (1), la surface de ladite extrémité constituant ladite zone (z1) peu ou pas réfléchissante, la face réfléchissante et la surface de ladite extrémité étant dans un même plan et étant inclinées par rapport à l'axe de la fibre optique émettrice ou de l'assemblage de fibres optiques émettrices.

7. Système selon l'une quelconque des revendications 1 à 6, **caractérisé en ce que** ledit premier miroir (M1) comporte une face revêtue d'un réseau de diffraction en volume, lequel comporte un trou dans ladite zone (z1) pour le passage dudit faisceau de traitement (FS1) dont l'efficacité de diffraction est déterminée pour défléchir le rayonnement quasi-monochromatique du laser d'éclairage réfléchi par la cible.

## Claims

1. A laser beam pointing system, **characterised in that** it comprises:
- at least one processing laser source (S1) for emitting a processing laser beam (FS1, FS2) towards a target (C1), said processing beam (FS1) being transmitted through a non-reflective zone (z1) of a first mirror (M1), said mirror (M1) allowing a return towards an imaging system (CA) receiving an illumination beam (FR2) reflected by the target, said low reflection coefficient zone (z1) of the first mirror (M1) inducing a shadow zone (ZA) towards the imaging system (CA);
- a second mirror (M2) receiving said processing beam designed to orient and reflect said beam towards the target;
- an illumination source (E1) for illuminating said target using the illumination beam (FE1);
- a first control circuit (CC) for controlling the orientation of said pointing system towards the target;
- a second control circuit (CT) for angularly shifting the processing beam (FS1) at a determined angle, for measuring the distance (D2) between the position of a zone (P1) of the target and the position of the spot of the processing beam on the basis of an image obtained by the imaging system, then shifting the processing beam in the opposite direction at an angle that corresponds to said measured distance (D2), the angular shift of the processing beam having an amplitude such that the measurement of the position of the target is not disrupted by the shadow zone;
- the second mirror (M2) ensuring a double function of fine stabilisation of the pointing through said second control circuit (CT) and on the basis of the signals coming from the imaging system (CA) and shifting the processing beam so as to avoid the disruption conveyed by the shadow zone.

2. The system according to claim 1, **characterised in that** said angle from which the processing beam (FS1) is angularly shifted corresponds to the diameter of said shadow zone (ZA) in the imaging device (CA).

3. The system according to claim 2, **characterised in that** it comprises a third mirror (M3) designed to reflect the light received from the second mirror (M2) towards said target (C1), or conversely to reflect the light received from the target towards said second mirror, said third mirror (M3) allowing the focusing of the beam received from the second mirror (M2) to be adjusted.

4. The system according to claim 3, **characterised in that** it comprises a fourth mirror (M4) receiving the light received from the first mirror (M1) and reflecting it towards the imaging system (CA).

5. The system according to any one of claims 1 to 4, **characterised in that** said processing beam (FS1) has a first wavelength or range of wavelengths, said illumination beam (FE1) has a second wavelength or range of wavelengths that is different from the first wavelength or range of wavelengths, the system further comprising a spectral filter (F1) located between the first mirror (M1) and the imaging system (CA) and allowing the transmission of the second wavelength or range of wavelengths only to the imaging system.

6. The system according to any one of claims 1 to 5, **characterised in that** the processing laser source (S1) comprises an emitting optical fibre or an assembly of several emitting optical fibres, one end of which is flush with said reflecting surface (1), the surface of said end constituting said limited reflective or non-reflective zone (z1), the reflective face and the surface of said end being in the same plane and being inclined relative to the axis of the emitting optical fibre or of the assembly of emitting optical fibres.

7. The system according to any one of claims 1 to 6, **characterised in that** said first mirror (M1) comprises a face that is coated with a volume diffraction grid, which comprises a hole in said zone (z1) for the passage of said processing beam (FS1), the diffraction efficiency of which is determined so as to deflect the quasi-monochromatic radiation of the illumination laser reflected by the target.

## Patentansprüche

1. Laserstrahlzeigesystem, **dadurch gekennzeichnet, dass** es Folgendes umfasst:
- wenigstens eine Verarbeitungslaserquelle (S1) zum Aussenden eines Verarbeitungslaserstrahls (FS1, FS2) in Richtung auf ein Ziel (C1), wobei der Verarbeitungsstrahl (FS1) durch eine nichtreflektierende Zone (z1) eines ersten Spiegels (M1) übertragen wird, wobei der Spiegel (M1) die Rückkehr in Richtung eines Bilderzeugungssystems (CA) zulässt, das einen von dem Ziel reflektierten Beleuchtungsstrahl (FR2) empfängt, wobei die Zone (z1) mit niedrigem Reflexionskoeffizient des ersten Spiegels (M1) eine Schattenzone (ZA) zu dem Bilderzeugungssystem (CA) hin induziert;
- einen zweiten Spiegel (M2), der den Verarbeitungsstrahl empfängt, um den Strahl in Richtung des Ziels zu orientieren und zu reflektieren;
- eine Beleuchtungsquelle (E1) zum Beleuchten des Ziels mit dem Beleuchtungsstrahl (FE1);
- eine erste Steuerschaltung (CC) zum Steuern der Orientierung des Zeigesystems in Richtung Ziel;
- eine zweite Steuerschaltung (CT) zum winkelmäßigen Verschieben des Verarbeitungsstrahls (FS1) in einem bestimmten Winkel zum Messen der Distanz (D2) zwischen der Position einer Zone (P1) des Ziels und der Position des Punkts des Verarbeitungsstrahls auf der Basis eines von dem Bilderzeugungssystem erhaltenen Bildes, dann Verschieben des Verarbeitungsstrahls in der entgegengesetzten Richtung in einem Winkel, der der gemessenen Distanz (D2) entspricht, wobei die Winkelverschiebung des Verarbeitungsstrahls eine solche Amplitude hat, dass die Messung der Position des Ziels durch die Schattenzone nicht gestört wird;
- wobei der zweite Spiegel (M2) eine Doppelfunktion des Feinstabilisierens des Zeigens durch die zweite Steuerschaltung (CT) und auf der Basis der von dem Bilderzeugungssystem (CA) kommenden Signale und des Verschiebens des Verarbeitungsstrahls hat, um die von der Schattenzone verursachte Störung zu vermeiden.

2. System nach Anspruch 1, **dadurch gekennzeichnet, dass** der Winkel, um den der Verarbeitungsstrahl (FS1) winkelmäßig verschoben ist, dem Durchmesser der Schattenzone (ZA) in der Bilderzeugungsvorrichtung (CA) entspricht.

3. System nach Anspruch 2, **dadurch gekennzeichnet, dass** es einen dritten Spiegel (M3) zum Reflektieren des vom zweiten Spiegel (M2) empfangenen Lichts in Richtung Ziel (C1) oder umgekehrt zum Reflektieren des vom Ziel empfangenen Lichts in Richtung des zweiten Spiegels umfasst, wobei der dritte Spiegel (M3) das Justieren der Fokussierung des vom zweiten Spiegel (M2) empfangenen Strahls zulässt.

4. System nach Anspruch 3, **dadurch gekennzeichnet, dass** es einen vierten Spiegel (M4) umfasst, der das vom ersten Spiegel (M1) empfangene Licht empfängt und es in Richtung des Bilderzeugungssystems (CA) reflektiert.

5. System nach einem der Ansprüche 1 bis 4, **dadurch gekennzeichnet, dass** der Verarbeitungsstrahl (FS1) eine erste Wellenlänge oder einen ersten Wellenlängenbereich hat, der Beleuchtungsstrahl (FE1) eine(n) zweite(n) Wellenlänge oder Wellenlängenbereich hat, die/der sich von der/dem ersten Wellenlänge oder Wellenlängenbereich unterscheidet, wobei das System ferner ein zwischen dem ersten Spiegel (M1) und dem Bilderzeugungssystem (CA) befindliches Spektralfilter (F1) umfasst und die/den zweite(n) Wellenlänge oder Wellenlängenbereich nur zum Bilderzeugungssystem durchlässt.

6. System nach einem der Ansprüche 1 bis 5, **dadurch gekennzeichnet, dass** die Verarbeitungslaserquelle (S1) eine emittierende optische Faser oder ein Bündel von mehreren emittierenden optischen Fasern umfasst, von denen ein Ende mit der reflektierenden Fläche (1) bündig ist, wobei die Oberfläche dieses Endes die schwach oder nicht reflektierende Zone (z1) bildet, wobei die reflektierende Fläche und die Oberfläche dieses Endes in derselben Ebene liegen und relativ zur Achse der emittierenden optischen Faser oder des Bündels von emittierenden optischen Fasern geneigt sind.

7. System nach einem der Ansprüche 1 bis 6, **dadurch gekennzeichnet, dass** der erste Spiegel (M1) eine Fläche aufweist, die mit einem Volumenbeugungsgitter beschichtet ist, das ein Loch in der Zone (z1) für die Passage des Verarbeitungsstrahls (FS1) aufweist, dessen Beugungseffizienz so bestimmt wird, dass die quasi-monochromatische Strahlung des vom Ziel reflektierten Beleuchtungslasers abgelenkt wird.
